# EUROPEAN PATENT APPLICATION

(11) **EP 3 091 612 A1**
(43) Date of publication of application: **09.11.2016**
(21) Application number: 16275067.3
(22) Date of filing: 29.04.2016
(51) Int. Cl.: H01Q 15/12, H01Q 15/24

(54) **ARRAY ANTENNA AND APPARATUS FOR USE OF THE SAME TO DISABLE VEHICLE MANAGEMENT SYSTEM**

(30) Priority: 01.05.2015 GB 201507526
(71) Applicant: Sylatech Ltd, Kirkbymoorside, Yorkshire YO62 6PX (GB)
(72) Inventor: COLLIS, Oliver, Kirkbymoorside, Yorkshire YO62 6PX (GB)
(74) Representative: Tomkinson, Alexandra

(57) **Abstract**

The invention relates to apparatus which includes an array antenna and which is provided of a form to be used in the selective disablement of the managements system of a vehicle so as to render the vehicle incapable of further movement and therefor neutralise any threat which may be posed by the vehicle continuing to be moved and/or by the contents of the vehicle, such as explosives, and thereby prevent the vehicle from representing a risk. The apparatus includes a magnetron and an array antenna including a screen which is provided with apertures in a configuration which is selected to allow the microwave energy to be emitted in a specific manner so as to be focussed and thereby allow the apparatus to be directional with respect to the disablement of a specific vehicle.

## Description

The invention to which this application relates is an array antenna, and apparatus incorporating the same. In one, non-exclusive, embodiment the apparatus is provided to be used to at least temporarily disable or partially disable a vehicle management system. In particular, although not necessarily exclusively, the aim is to provide apparatus which, when it is operated, renders the vehicle incapable of powered movement at least for a period of time during and/or following operation of the apparatus.

It is known that vehicles, most typically vehicles which travel along roads or the ground in general, represent a significant security risk and danger to the public when in the control of persons who are intent on causing harm or if the person controlling the vehicle falls ill, or is under the influence of alcohol and/or drugs such that the vehicle is effectively out of control. For example, the vehicles can be driven deliberately at persons and/or buildings, and most typically public buildings such as transport hubs in the form of airports, train stations or the like, schools, colleges and the like. The vehicle itself represents a significant cause of possible harm and, the chance of harm can be further increased if, for example, the persons within the vehicle have weapons which they use or if the vehicle contains explosives.

For these reasons it is known to form significant barriers around many buildings to prevent vehicular access to the proximity of the building in question. While these barriers can be effective in physically stopping the motion of the vehicle they cannot practically be built around every possible target building and/or it may not be possible to provide a barrier around the entire building or perimeter of an area due to space constraints, access requirements and/or the size of the area which is required to be subject to the barrier protection.

As a result, it is still often the case that security vehicles and/or personnel are required to be present, possibly at all times, or in response to a particular perceived threat or incident, at buildings or specific areas but, in practical terms the effectiveness of their attendance is relatively small due to the problem of being able to provide an instantaneous and effective response to a threat as it occurs. As a result, the presence of the security vehicles and/or personnel tends to be for more of a deterrent factor to provide a visible reassuring presence to the public than actually being able to stop a vehicle or vehicle carried threat if it is occurring.

It is also known that the vast majority of vehicles are controlled in terms of the operation of the engine, brakes, and thereby movement of the vehicle, by relatively complex, electrically powered, management systems and, as such, the operation of the vehicle is dependent upon the operation of the vehicle management system such that if it does not operate correctly then the vehicle cannot move under power.

An aim of the present invention is therefore to provide apparatus which can be used to prevent a vehicle from continuing its movement, such as towards a possible target area or building, and thereby avoid the potential identified event from occurring at the target area or building. A further aim is to provide apparatus in a form which ensures that when the apparatus is operated, the user can be confident that the apparatus will operate reliably, and within a given range, to disable the vehicle management system to which the apparatus is directed.

In a first aspect of the invention there is provided apparatus for emitting microwave energy to cause a vehicle management system to be at least partially disabled at least temporarily, said apparatus including at least one magnetron, a power supply thereto and wherein the apparatus includes an array antenna including a screen with a series of apertures through which the emitted microwave energy passes to produce the same in a predefined configuration.

In one embodiment the predefined configuration is a quasi circular polarisation configuration.

In one embodiment the apertures are respectively positioned on a screen such as to cause the microwave energy to be emitted in the quasi circular polarisation configuration.

In one embodiment, and typically in addition to the positioning of the apertures, the apertures are formed in a substantially C shape.

Typically the orientation of each of the apertures is rotated by X degrees about it's central axis with respect to the position of an adjacent aperture.

In one embodiment X has a value in the region of 1 and 100 degrees.

In one embodiment the apertures are provided in rows and columns and in one embodiment the central axes of the respective apertures are aligned in the columns and offset in the rows.

In one embodiment the apertures are provided in groups and each group is repeated at another position on the array screen at least once.

In one embodiment each group includes an aperture in a position which is offset to the other apertures in the group.

Typically the first group has a first configuration of apertures and the second group has a second configuration of apertures.

In one embodiment the emitted microwave energy travels in multiple planes from the apparatus and thereby at least some of the energy will impact on the management system of a vehicle when the vehicle is located within a predefined range so as to disable the vehicle management system.

In one embodiment the emitted microwave energy or electromagnetic radiation is emitted in a directional manner such that the apparatus can be pointed towards the target vehicle and the energy will be emitted in that direction.

In one embodiment the apparatus includes at least one choke or barrier assembly to prevent or minimise the possibility of the emitted electromagnetic radiation from being directed in unwanted directions and thereby avoids the possibility of the apparatus unintentionally disabling vehicle management systems of other vehicles.

Typically the apparatus includes a housing in which the magnetron and screen are located and the housing is mechanically locatable with another item to be mounted thereon for use, or in another embodiment, may be capable of being hand held.

In one embodiment the apparatus is permanently mounted at a location for use in a fixed position or it may be mounted on a vehicle such as a car, helicopter or boat and move with the same and be available for use in relation to other vehicles to which the apparatus is directed when operated.

In one embodiment the apparatus is provided to be selectively operable and then be operated for a limited period of time so as to allow the microwave energy to be emitted so as to cause at least the temporary disablement of the target vehicle management system, and hence the vehicle and thereby prevent the vehicle from continuing in motion.

Typically the time of non-movement is sufficient to allow other security and/or restraining measures to be taken on the vehicle and/or the occupant of the same.

In a further aspect of the invention there is provided apparatus including a magnetron, a power supply therefore, and wherein a screen is provided with a plurality of apertures formed thereon, said apertures formed so as to cause microwave energy to be emitted from the apparatus in a predetermined configuration and at least one choke assembly is provided to limit the scope of the emissions such that the emissions are focussed on a particular vehicle within a predetermined range.

Typically the apparatus includes control means which allow pulsed operation of the magnetron.

In one embodiment the one or more choke assemblies act to minimise or prevent the scattering of the electromagnetic radiation in directions other than the intended direction and the chokes also act to increase the emitted electromagnetic radiation in the intended direction by up to, for example 2dB.

In a further aspect of the invention there is provided an array antenna for emitting microwave energy therefrom said array antenna including a screen with a series of apertures which are configured to allow the emitted microwave energy to pass through the same to produce a quasi circular polarisation.

In one embodiment, the apertures are positioned in predefined positions and formed in a substantially C shape.

Typically, the orientation of each of the apertures is rotated by X degrees about it's central axis with respect to the position of an adjacent aperture.

In one embodiment X has a value in the region of 1 and 100 degrees.

In one embodiment the apertures are provided in rows and columns and in one embodiment the central axes of the respective apertures are aligned in the columns and offset in the rows.

In one embodiment the apertures are provided in groups and each group is repeated at another position on the array screen at least once.

In one embodiment each group includes an aperture in a position which is offset to the other apertures in the group.

Typically the first group has a first configuration of apertures and the second group has a second configuration of apertures.

In a further aspect of the invention there is provided a method for disablement of a vehicle management system, said method including the steps of operating apparatus to emit electromagnetic radiation when the vehicle is within a predetermined range of the apparatus, and providing the emitted electromagnetic radiation with a predetermined pattern so as to cause the radiation to be emitted in multiple different planes and thereby increase the likelihood of the radiation having the disabling effect on the vehicle management system.

There is therefore provided apparatus which includes an array antenna and which is provided of a form to be used in the selective disablement of the managements system of a vehicle so as to render the vehicle incapable of further movement and therefor neutralise any threat which may be posed by the vehicle continuing to be moved and/or by the contents of the vehicle, such as explosives, and thereby prevent the vehicle from representing a risk. The apparatus includes a magnetron and an array antenna including a screen which is provided with apertures in a configuration which is selected to allow the microwave energy to be emitted in a specific manner so as to be focussed and thereby allow the apparatus to be directional with respect to the disablement of a specific vehicle.

Specific embodiments of the invention are now described with reference to the accompanying drawings; wherein
Figure 1 illustrates in a schematic manner operation of the apparatus in accordance with one embodiment of the invention,
Figures 2a-e illustrates an embodiment of apparatus in accordance with one embodiment of the invention;
Figures 3a-d illustrate details of the electromagnetic radiation antenna assembly in accordance with one embodiment of the invention; and
Figures 4a and b illustrate Theta and Phi cut radiation patterns obtained from testing apparatus in accordance with one embodiment of the invention.

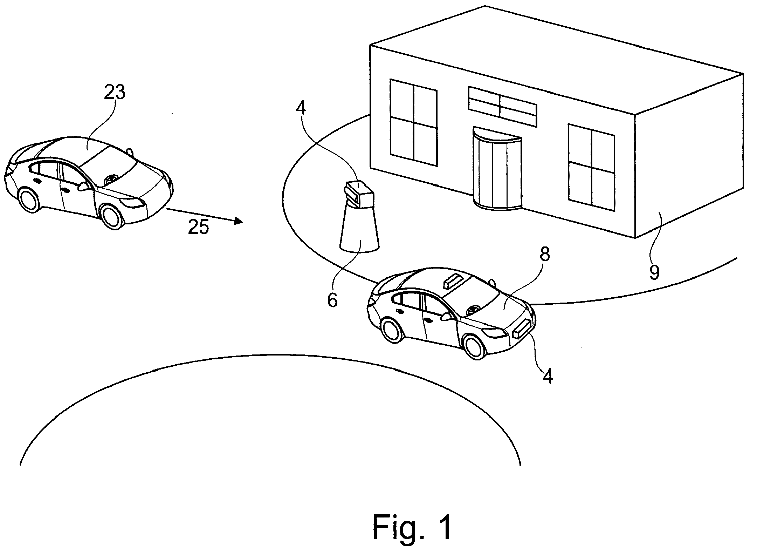

Referring firstly to Figure 1, the apparatus 2 in accordance with the invention includes a housing 4 which can be provided for location in a fixed position as indicated at location 6 or can be mounted on a vehicle such as, in this example, a vehicle 8 or which could equally be a boat, helicopter or other vehicle.

The apparatus is typically located at a fixed position with respect to a building 9 which is a security risk such as an airport or the like. The apparatus can therefore be provided and be functional upon access being gained to the control means. The location for the same may also mean that the direction in which the housing is pointed can also be selected. Alternatively, when the housing is provided to be used on a vehicle the same can be located at an appropriate position such as at the front bumper 11 of the vehicle as indicated and the operation of the same is controlled by the operator of the vehicle. Obviously the main advantage of this arrangement is that the housing can be moved to a suitable location for use.

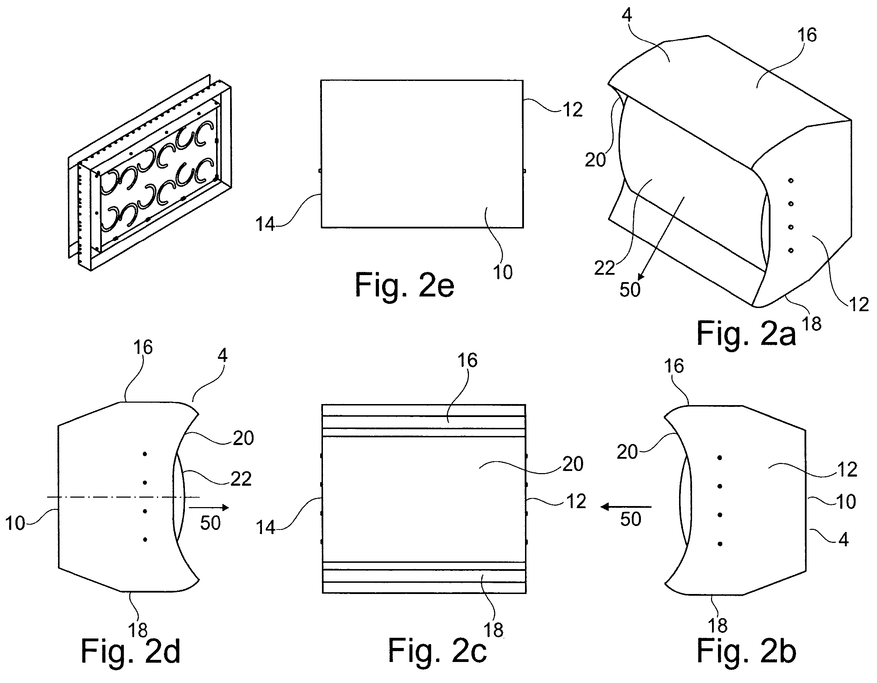

The housing 4 is shown in greater detail in Figures 2a-e. The housing has rear, side and top and bottom faces 10,12,1416,18 and a front face 20 through which the electromagnetic radiation is emitted from the housing through a curved protective planar material 22. The effect of the electromagnetic radiation on the management system of a vehicle 23 which is in the range of the apparatus, is to prevent the vehicle management system from operating as the same is effectively disabled. This, in turn means that the vehicle 23 is rendered motionless and so, with reference to Figure 1, its route of travel 25 to a potential target such as the building 9 is stopped, at least for a sufficient period of time so as to allow further action to be taken to permanently control the movement of the vehicle.

Within the housing 4 there is provided a power supply connection at the rear of a magnetron 24 and which power supply is controlled to operate the magnetron in a pulsed manner to generate pulses of electromagnetic radiation to be emitted from the housing.

While the electromagnetic radiation is known to be capable of disabling the vehicle management system it will only do so if the radiation "hits" the vehicle management system and there is a need for the user to be able to be certain that the radiation will hit the vehicle management system when the vehicle is in a predetermined range and distance from the apparatus. It is found that if the microwave energy radiation was to be emitted from the housing through a single slot antenna then the radiation would be in a single plane which, in turn would mean that if the vehicle management system of the vehicle which is the target is not located in that plane, then the vehicle management system would not be disabled and this level of uncertainty in the success or otherwise of effectiveness of operation of the apparatus is not acceptable.

Thus, in accordance with the invention, there is provided an array antenna formed on a screen 26 which is provided between the magnetron 24 and the protective front material 22.

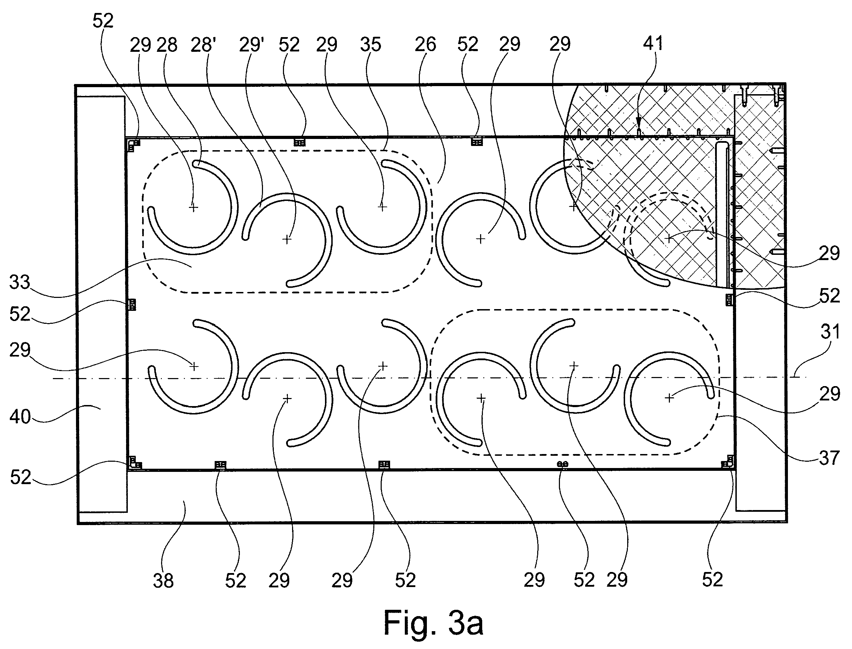

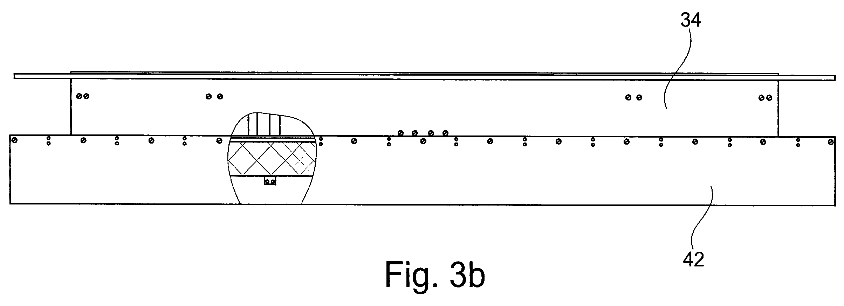

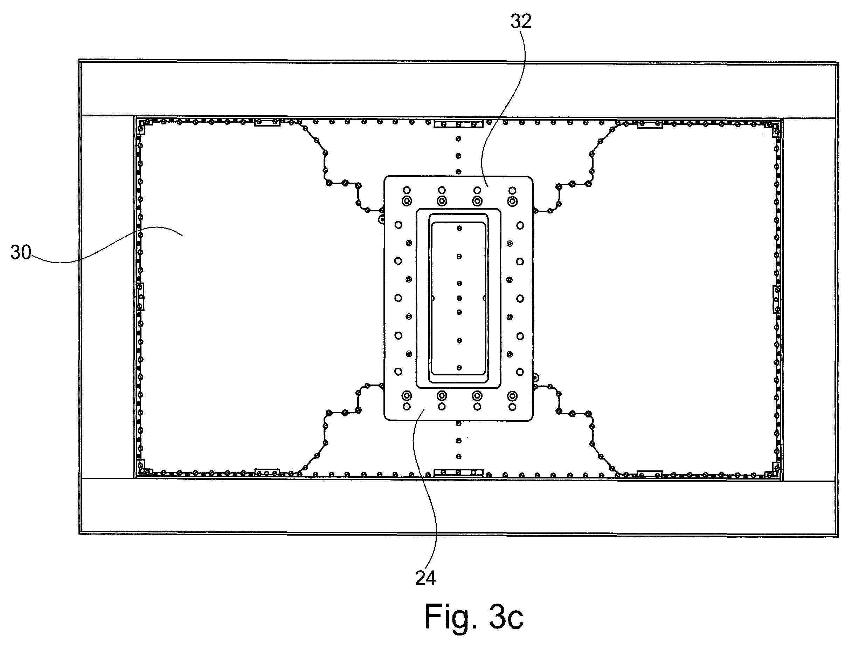

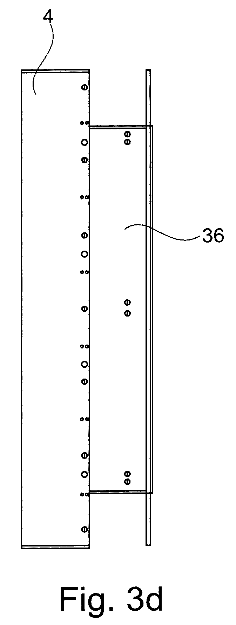

As shown in detail in Figure 3a the array antenna screen in accordance with the invention is provided with a series of curved, substantially C-shaped slots 28. Part of the screen 41 is removed to illustrate the rear but will normally extend into the corner with further apertures 28 continuing of the same shape as indicated in broken lines. Each slot is provided with a central axis 29. The apertures 28 are selectively positioned so as to emit microwave energy in a quasi circular polarisation. The orientation of each of the apertures is rotated by a suitable amount about it's central axis 29 with respect to the position of an adjacent aperture and in this case is rotated by 90 degrees.

In one embodiment if the apertures 28 are addressed as being provided in rows, one of which, row axis 31, is shown, and columns, one of which, column axis 33, is shown, it will be seen that the central axes 29 of the respective apertures are aligned along their respective column axis and offset with respect to the row axis.

The apertures are provided in groups of three, one of which, group 35 is illustrated by broken lines. The orientation of the apertures in each group is repeated at another position on the array screen at least once, with the orientation of the apertures in group 35 being repeated in the group of three apertures directly below.

In the group 35 the aperture 28' with its axis 29' is in a position which is offset to the other apertures in the group and this is repeated in each of the groups of apertures.

Typically at least one of groups has apertures provided in a first configuration and there is provided a second group (group 37) which has apertures in a configuration which differs from the configuration of the apertures in the first group.

The effect of the configuration and shaping of the apertures of the antenna is to ensure that the microwave energy and electromagnetic radiation is emitted in a quasi-circular polarisation pattern. This, in turn, means that the effective area of the emitted electromagnetic radiation is increased to such an extent as to mean that the likelihood of the target vehicle management system being in the area of electromagnetic radiation is greatly increased to an extent that the operation of the same will provide the required effect on the vehicle management system when in range while, at the same time ensuring that the strength of the electromagnetic radiation is sufficient so as to cause the vehicle management system disablement to occur. The antenna also includes a rear plate 30 and flange 32.

In order to prevent or minimise the occurrence of back scattering of the electromagnetic radiation which is emitted and hence prevent the risk of the electromagnetic radiation having an adverse effect on the operation of the vehicle on which the apparatus may be mounted and/or other vehicles which are not intended to be disabled, the antenna assembly also includes a choke assembly which comprises rear portions 34,36, middle portions 38, 40 and front portions 42,44. The choke assembly ensures that the electromagnetic radiation which is emitted, is substantially only emitted through the front face 22 of the housing in the direction of arrow 50. This also acts to strengthen the electromagnetic radiation which is emitted in the required direction 42 from the antenna assembly and out of the housing. The chokes assembly is located in position using clamps 52

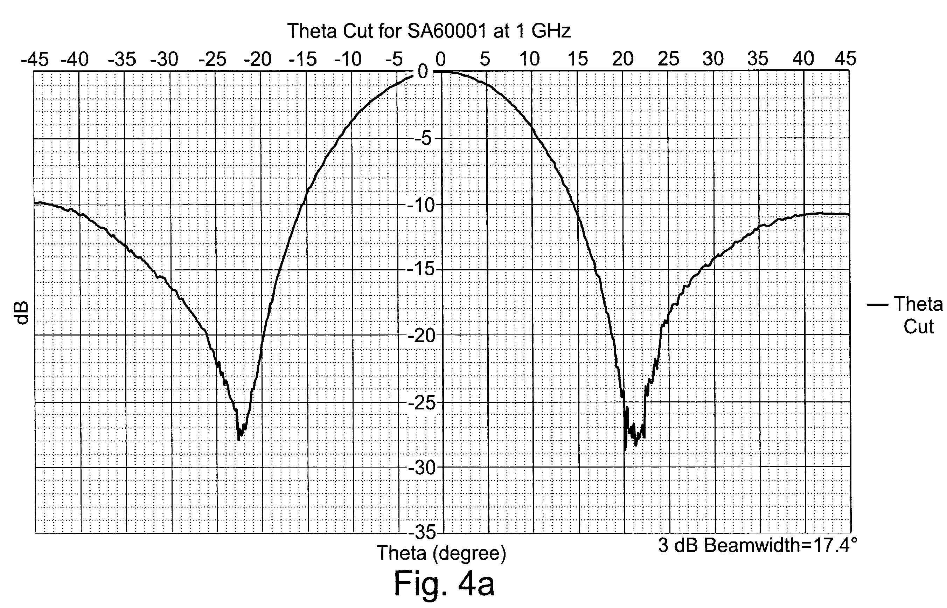

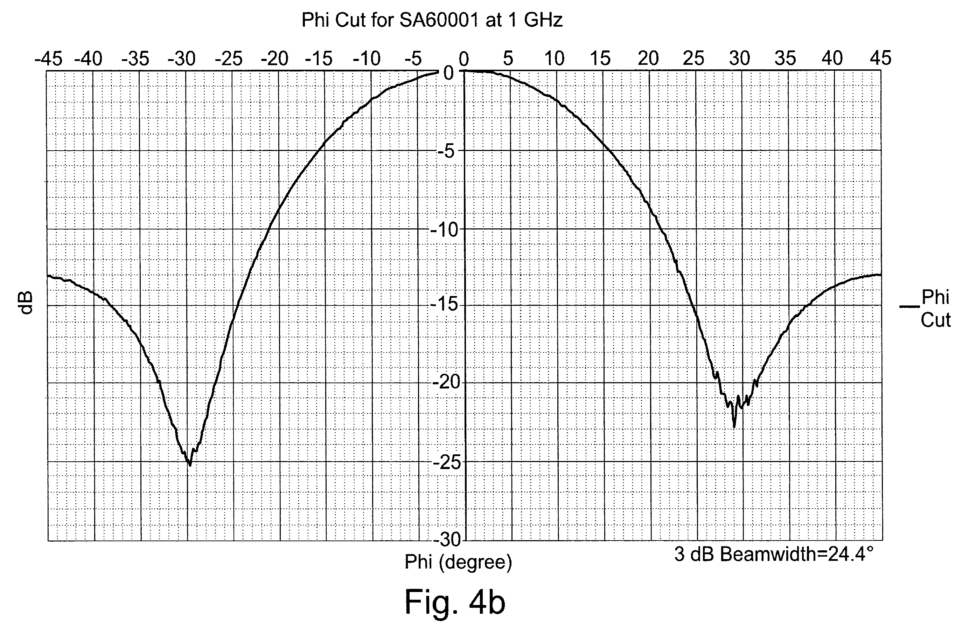

The Figures 4a and b illustrate Theta and Phi cut radiation patterns obtained from the testing of the apparatus in the embodiment shown in the previous figures and illustrates that with a 3Db beamwidth a relatively focussed emission can be generated from the apparatus so as to provide emissions of the required intensity in order to allow the apparatus to be used to disable the management system of a vehicle.

Thus in accordance with the invention there is provided apparatus and an array antenna with a screen of a form which can be used in apparatus in order to allow the same to be effective in allowing the disablement of a management system of a target vehicle so as to render the vehicle inoperable and for the apparatus to be provide in a manner which can be rendered operable and effective quickly and efficiently and thereby prevent the occurrence of a potential damaging incident such as a terrorist threat..

## Claims

1. Apparatus for emitting microwave energy to cause a vehicle management system to be at least partially disabled at least temporarily, said apparatus including at least one magnetron, a power supply thereto and wherein the apparatus includes an array antenna including a screen with a series of apertures through which the emitted microwave energy passes to produce the same in a predefined configuration.

2. Apparatus according to claim 1 wherein the apertures are respectively positioned on the screen such as to cause the microwave energy to be emitted in a quasi circular polarisation configuration.

3. Apparatus according to claim 2 wherein the apertures are substantially C shaped.

4. Apparatus according to claim 4 wherein the orientation of each of the apertures is rotated by X degrees about it's central axis with respect to the position of an adjacent aperture and X has a value in the range between 1 and 100 degrees.

5. Apparatus according to claim 1 wherein the apertures are provided in rows and columns on the screen and the central axes of the respective apertures are aligned in the columns and offset in the rows.

6. Apparatus according to claim 1 wherein a plurality of groups of apertures are formed on the screen and each group is repeated at another position on the screen at least once.

7. Apparatus according to claim 6 wherein each group includes an aperture in a position which is offset to the other apertures in the group.

8. Apparatus according to claim 6 wherein a first group has a first configuration of apertures and a second group has a second configuration of apertures.

9. Apparatus according to claim 1 wherein the emitted microwave energy travels in multiple planes from the apparatus and thereby at least a portion of the emitted energy impacts on a management system of a vehicle which is located within a predefined range so as to disable the vehicle management system.

10. Apparatus according to claim 9 wherein the emitted microwave energy or electromagnetic radiation is emitted in a directional manner so that the apparatus can be pointed towards the target vehicle and the energy will be emitted in that direction.

11. Apparatus according to claim 1 wherein the apparatus includes at least one choke assembly to at least minimise emitted electromagnetic radiation from being directed in unwanted directions.

12. Apparatus according to claim 1 wherein the apparatus includes a housing in which the magnetron and screen are located, said housing mechanically locatable with another item to be mounted thereon for use, and/or can be hand held in use.

13. Apparatus according to claim 1 wherein the apparatus is provided to be selectively operable and then be operated for a limited period of time continuously or in pulses so as to allow at least the temporary disablement of the target vehicle management system.

14. Apparatus including a magnetron, a power supply therefore, and wherein a screen is provided with a plurality of apertures formed thereon, said apertures formed so as to cause microwave energy to be emitted from the apparatus in a predetermined configuration and at least one choke assembly is provided to limit the scope of the emissions such that the emissions are focussed on a particular vehicle within a predetermined range.

15. Apparatus according to claim 14 wherein the one or more choke assemblies act to minimise or prevent the scattering of the electromagnetic radiation in directions other than the intended direction and the one or more choke assemblies also act to increase the emitted electromagnetic radiation in the intended direction.

16. An array antenna for emitting microwave energy therefrom, said array antenna including a screen with a series of apertures which are configured to allow the emitted microwave energy to pass through the same to produce a quasi circular polarisation, at least some of said apertures are positioned in predefined positions and formed in a substantially C shape and the orientation of each of the C-shaped apertures is rotated by X degrees about it's central axis with respect to the position of an adjacent aperture and X has a value in the region of 1 and 100 degrees.

17. A method for disablement of a vehicle management system, said method including the steps of operating apparatus to emit electromagnetic radiation when the vehicle is within a predetermined range of the apparatus, and providing the emitted electromagnetic radiation with a predetermined pattern so as to cause the radiation to be emitted in multiple different planes and thereby increase the likelihood of the radiation having the disabling effect on the vehicle management system.
